# EUROPEAN PATENT APPLICATION

(11) **EP 1 311 112 A2**
(43) Date of publication of application: **14.05.2003**
(21) Application number: 02257133.5
(22) Date of filing: 15.10.2002
(51) Int. Cl.: H04N 1/60

(54) **Digital image optimization**

(30) Priority: 13.11.2001 US 7972
(71) Applicant: Scitex Digital Printing, Inc., Dayton, Ohio 45420-4099 (US)
(72) Inventor: Piatt, Michael J., Dayton, Ohio 45419 (US); Wozniak, Terry, Springfield, Ohio 45502 (US); Howard, Joshua H., Kettering, Ohio 45419 (US)
(74) Representative: White, Duncan Rohan

(57) **Abstract**

A system and method are provided for correcting printed color and tone of a library of similar digital images. A single image (20) is selected from a library (10) of similar images, and manipulated with a set of unique transformations. Each of the manipulated images is processed for printing. Printer settings for actual job data are identified, and multiple reproductions of the selected image are printed at the identified printer settings for the job. Optimum transformations are determined by visual inspection of a full array of images, each of the full array of images having been manipulated by a different transformation prior to printing.

## Description

### Technical Field

The present invention relates to image processing, and, more particularly, to correcting the printed color and tone scale of a library of similar digital images.

### Background Art

Various techniques are known for digital printers to provide continuous tone (monochrome or color) printing. Traditional offset printing systems compensate for tone nonlinearity through the measurement of dot gain. Dot gain is the percentage of spot size increase of a 50% intensity dot. This dot gain is corrected in the production of the printing plates. Further correction can be done through adjustment of the pressure between the transfer media and the printing plate. The object is to obtain a linear tone scale from the lightest to the darkest shade of a given ink in the printing system. Modifying the pressure between the printing plate and the transfer media can also change the amount of ink transferred and therefore affect the color balance of the resultant multicolor printed image.

Color and tone scale correction are, therefore, often necessary to obtain acceptable image quality of printed images. Methods of correcting color and tone of multiple color printing systems usually involves some trial and error. Correlation between the resultant image quality from the printer and the data or process modifications that caused the deviations in quality must be established.

High speed digital inkjet printing systems apply the ink directly to the substrate as directed by the input data. In certain digital printing systems the application of a linear gradation of ink to a substrate does not result in the appearance of a linear gradation in tone. The image data must be corrected so that tone linearity can be achieved on a particular substrate. In the past, it has been necessary to print and measure the resulting tone from samples of a number of printed ink levels in order to determine the appropriate data transformation. This transformation was then applied to the image data.

Typically, printing system configurations and substrates differ in acceptable maximum ink limit. Problems in image quality, such as edged definition and loss of detail in the shadow areas, can result. Image quality and ink drying time varies significantly with the substrate. As conditions of the printing system and substrate type change regularly, it is often necessary to determine new data transformations that redefine the tone curve shape and upper ink limit for each ink in the system.

Prior art systems and methods have attempted to create variable output from a single input image. Typical applications involve iterative on screen selections of modified images relative to a standard for the purpose of identifying the optimal transformation. This approach has several faults. The images evaluated and selected from the screen representation often do no correlate well to the printed output. This is particularly true in printing systems that vary with set up parameters such as print speed, paper, and dryer temperature. On screen selections are a rough approximation at best. Secondly, these systems do not automate the generation and application of the appropriate transfer functions to the image library. High speed digital press applications require the manipulation and processing of massive amounts of digital information. There is a real advantage or even a necessity to batch process operations in the interest of efficiency.

It would be desirable to be able to determine an appropriate data transformation to be applied to an image library.

### Summary of the Invention

The present invention relates to a determination of an appropriate data transformation to be applied to an image library. In the present invention, a number of predetermined transformations are applied to a page of sample image data. The printed output is examined to determine which transformation most closely approximates linear tone and optimal print quality for each type of graphics and text. From these master curve selections, unique curves for each primary ink in the system can be derived and applied to the image data. Further, any transformation function can be applied to a representative image within an image library to identify the effects on the printed output. A single image representative of a library of images is scaled down in size so that a number of them will fit onto a single printed page. Neighboring images on the page each represent different modifications to the image data relative to the control sample.

In accordance with one aspect of the present invention, a method is provided for determining appropriate data transformations to be applied to an image library by evaluating the print quality of a single representative image in the library. A single image is selected from a library of similar images. This image is optionally resized so that multiples of the image will fit on a single page. Each image is manipulated be a fixed or a user defined set of transformations. The different versions of the same image are processed for printing. The printed results are evaluated side by side by the user, to determine the preferred printed result. Each of the different versions of the same image is labeled with a letter and a number that identifies the transformation applied to that image. The user inputs the code letter and number back into the same software that generated the multiple variations of the selected image. The software outputs the appropriate transformation, which is usually then input into the system RIP, that is to be used on the rest of the images in the library. The suitable transformations used on the single image are presumed to be appropriate on the rest of the image in the library.

Other objects and advantages of the invention will be apparent from the following description, the accompanying drawings and the appended claims.

### Brief Description of the Drawings

Fig. 1 illustrates an exemplary image library;
Fig. 2 is a schematic block diagram illustrating the process of the present invention;
Figs. 3A, 3B, 3C and 4A, 4B, 4C are graphic illustrations of transformations; and
Fig. 5 shows individually manipulated and scaled images.

### Detailed Description of the Preferred Embodiments

The present invention identifies a simplified method for determining an appropriate transformation for application to images to be printed on a given system and substrate. The present invention further permits determination of the most appropriate ink loading for text printing. It is not uncommon to have a separate data transformation specifically for text data in order to specifically optimize the quality of text. The system described herein allows determination of both the maximum graphics ink limit, as well as, the appropriate text printing level. Further, the present invention can be extended to identify the optimum curve shape and ink limit for specific types of graphics, such as business graphics, photographs, line art, etc. The output of this process is the determination of one or more one dimensional transformations of the cyan, magenta, yellow, black (CMYK) input data to achieve linear tone response on the printed image.

In accordance with the present invention, a single image from a library is scaled in size so that multiple versions of this image will fit on a single or multiple printed pages. The image size can be auto scaled for printing, without changing the characteristics of the image. Additionally, the resized images can be auto positioned on the substrate. A series of related transformations are applied to individual representations of the image and printed along side of the original control image. A number of processing parameters can be optimized by proper selection of the desired image quality. These parameters include, but are not limited to, tone scale correction, color correction in a multicolor system, optimized dithering algorithm, and maximum ink limit. The test page defined by the present invention contains a series of images and associated codes. The codes identify the settings for image transformation. By visually examining the images against a defined set of criteria, the proper image manipulations can be identified. These transformations can then be applied to the entire image library. Printer specific influences on image quality, such as drying power and paper selection, are automatically accounted for through this closed loop system.

In the existing art, it is a laborious process to determine the appropriate transformations necessary to obtain balanced color on a multicolor digital printing press. Rigorous methods involve printing out the entire tone scale for each color in the system and measuring the results with a spectrophotometer. Next, an input/output transfer function is derived that is applied to the image data. This transfer function will assure linear tone scale gradations from the lightest to the darkest shade of print for each colorant in the system. Individual transformations are then applied to each color plane of the image data.

Other types of color transformations require similar procedures. For example, application of upper ink limits and adjustments in color require careful measurement of control images in order to predict the alterations necessary to image data. One skilled in the art will appreciate the process of International Color Consortium (ICC) profile generation and application of multidimensional transformations to image data in order to maximize the color gamut and accurately reproduce color to a known standard.

The present invention addresses these existing problems and difficulties by creating a simplified approach to image management by allowing an entire series of use selected transfer functions to be applied to a representative image in a library of similar character. The printed results from these multiple transformations are presented on paper for review by the press operator. The unaltered image data is printed at the same time for reference comparisons to the transformed data. The desired transform can be identified by a simple code name. This name can be input into commercially available, modified, or developed software that creates the appropriate transformation and/or look-up tables to be applied to the remainder of the image library data.

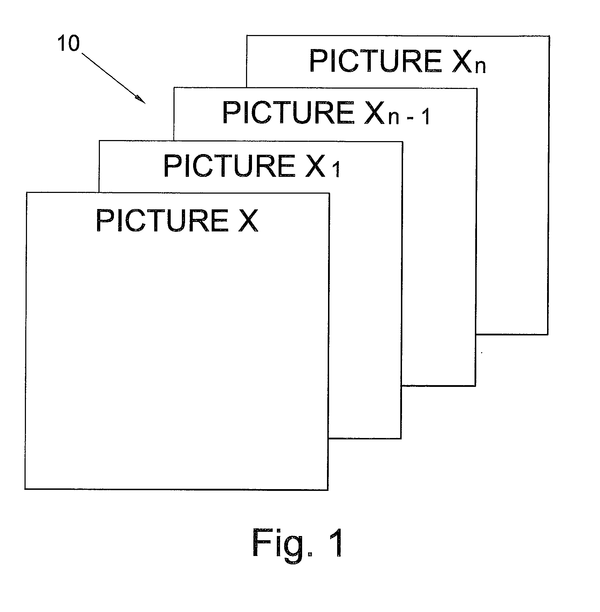

Referring now to the drawings, there is illustrated in Fig. 1 an exemplary image library 10, of images X, X₁, Xₙ₋₁ and Xₙ. The assumption is made that this library is somewhat homogeneous. That is, the images in the library are preferably created through a similar process and under similar conditions, such as via a scanner or a digital camera. Furthermore, in a preferred embodiment of the invention, the image processing for all images in the library is the same, with all of the pictures being of the same resolution and in the same color space. Also, the images typically follow the same workflow of batch process manipulation, RIPping and, eventually, printing. It may be a group of scanned data from a singular scanning device, or it may be a set of pictures taken with a digital camera under similar lighting conditions. Alternatively, it may be a set of photographs which have been digitized by a fixed processes and stored on a CD. In any case, the files in the library all exhibit similar characteristics in terms of color saturation, hue, edge acuity, and so forth.

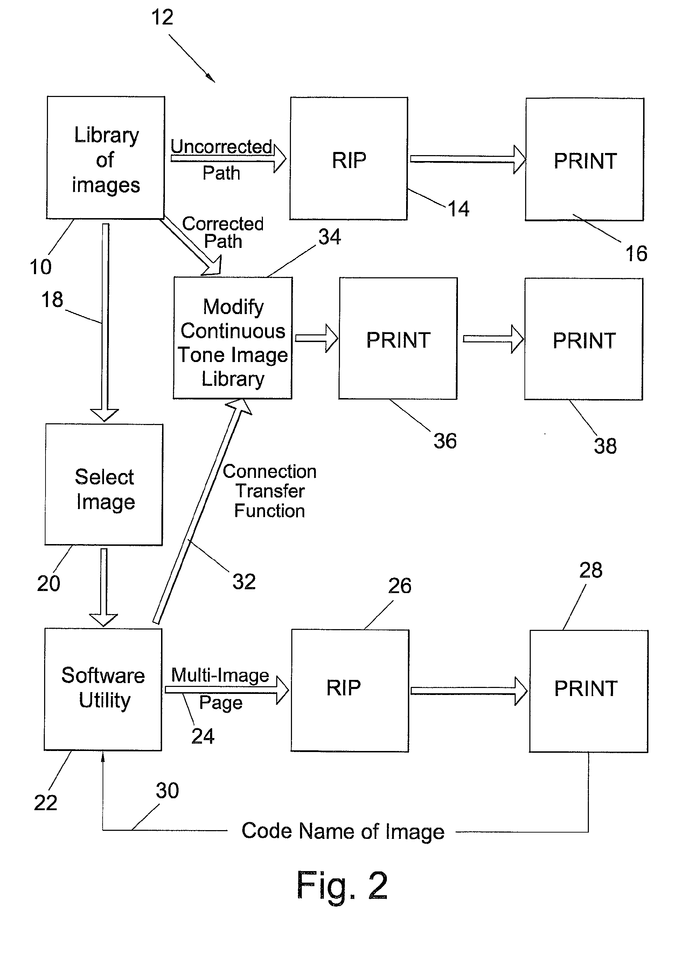

The process of the present invention is shown schematically in Fig. 2. In the schematic 12, the library of images 10 from Fig. 1 is used. One possible operation is simply to print them as they are shown. This is indicated as an uncorrected path to RIP 14 and a print operation at block 16. Often times the uncorrected images have not been optimized for imaging on a particular marking device, such as a continuous inkjet multi-color printing press. Upon inspection of the printed or unprinted images in the library, a user may select an optimization process along path 18. Through this process, a single representative image is selected at block 20 from the library 10. This image in input into software that will perform a transformation. In the example drawings, different tone scale correction curves are applied to one or more of the primary inks in the system. Also, different manipulations can be performed. For example, different upper ink limits can be applied to each image.

Continuing with Fig. 2, the software at block 22 has a simple user interface that allows browser selection of the appropriate image from the library targeted for manipulation. The software allows for the selected image to be scaled down in size. A different transformation is then applied to each one of the smaller images. The transformations are stored in the form of LUT's or Look-up tables. A different table is applied to each image. In the example herein, the tables are tone scale correction transformations. However, those skilled in the art will understand that any transformation can be applied to the image. Preferably, the tables are stored in the same directory as the program, and the program automatically applies each one of the stored transformations to the selected image. If the user does not have a set of transformations of their own, the software can apply a set of default transformations to the selected image. If the user knows what transformation was applied to the data with the desired result, the user can apply the same transformations to the remainder of the image library manually, without going back into the program that created the full array of modified images.

The user interface allows the user to determine whether to apply these transformations to each color plane of data (CMYK) or just to certain color data. For example, if an image is too green, based on the amount of cyan and yellow, the user may want to apply lower ink limits only to those colors. If the entire image is under exposed, the user may want to darken all color planes of data at the same time. The existing software accommodates these manipulations.

Continuing with Fig. 2, a set of image modifications is selected. The selection of image alterations is limited only by the available software to generate these functions. One skilled in the art can conceive of a number of such functions that are typically applied at one time or another in a digital image workflow. For purposes of example, tone scale linearization functions will be applied to the selected image via the software.

It has been determined that the transformation necessary to obtain a linear graduation in tone is very dependent upon the ink/substrate set. This is particularly the case in high speed digital ink jet printing systems. In these systems, droplet dispersion techniques are used to obtain various levels of intensity. Few droplets, spaced far apart, are used to make the highlights. Many droplets, placed close to each other, are used to make the shadows.

The dwell time, after printing and before drying the ink, has a strong influence on individual dot size. This, in turn, has a dramatic effect on the resulting color on the printed sheet. Processed colors, which are made up of droplets from two or more of the primary inks, are particularly sensitive to small shifts in dot size from one or more of the constituents. It is important to determine the tone scale transformation for each of the inks at the normal operating speed of the press.

Although it is often advantageous to derive exact linearization tone scale correction curves by conventional methods, it is not always practical or necessary to do so. It has been determined that many, if not all, linearization transformation curves are well behaved monotonic functions. Further, for a specific print engine, one can experimentally derive the envelope of practical transformations for a range of paper types. Given this information, a series of curves can be derived that bracket the range of interest.

Another important parameter in the characterization of the ink/substrate printing system is the determination of the upper ink limit. Most substrates cannot handle full coverage of each of the primary inks at the same pixel location. The tone scale calibration curve can be used to restrict ink loading on the paper of the individual primary inks in the system. It is possible to identify a range of upper ink limits to cover the optimum selection for a number of paper stocks. Combining these variables allows one to develop a predetermined set of curves of which one of the set will be appropriate for a specific ink/substrate combination.

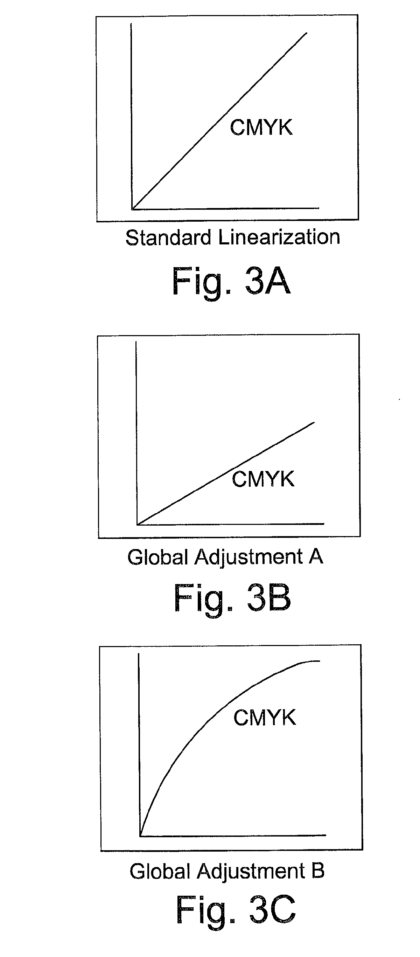

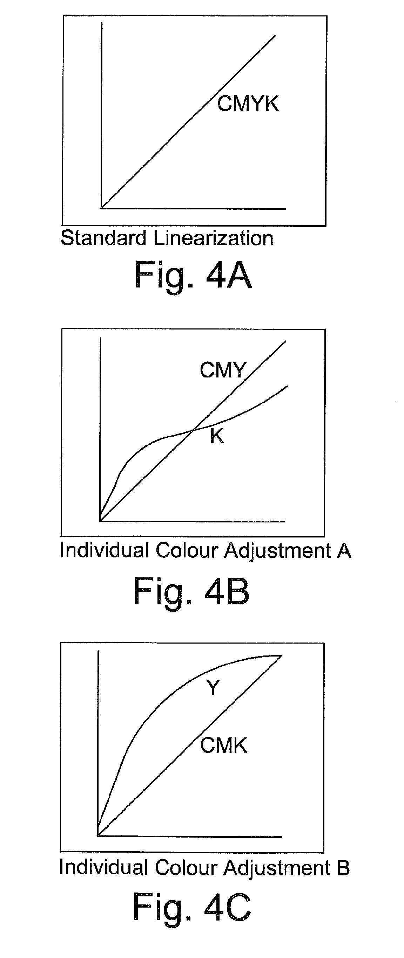

In the example used herein for purposes of illustration, the user first decides on a mode of operation. For example, the user can operate globally to adjust the continuous tone image, and thereby affect all of the colors simultaneously. Alternatively, the user can operate on individual color planes of the image, and thereby shift the color balance of the image. These transformations are shown schematically in Figs. 3A, 3B, 3C and 4A, 4B, 4C, respectively. The type of transformation and its magnitude is determined by the condition of the original image. Fig. 3A is a standard linearization, and Figs. 3B and 3C are global adjustment illustrations. Likewise, Fig. 4A is a standard linearization while Figs. 4B and 4C are individual color adjustment representations.

It is an advantage of this approach of the present invention that a significant number of transformations can be applied to a single image and viewed side by side in printed form. After selection of the transfer function, the software scales the image down to a predetermined size and applies a different transformation to each of the scaled image samples. The method of size reduction is not arbitrary. It is not a necessary requirement to maintain all of the image detail. In fact, depending upon the scaling factor, it may be almost impossible to do so. However, it is necessary to preserve the overall character of the original image in terms of color saturation, hue, and lightness. Averaging multiple pixels on a color-by-color basis has proven to be an appropriate method of image scaling.

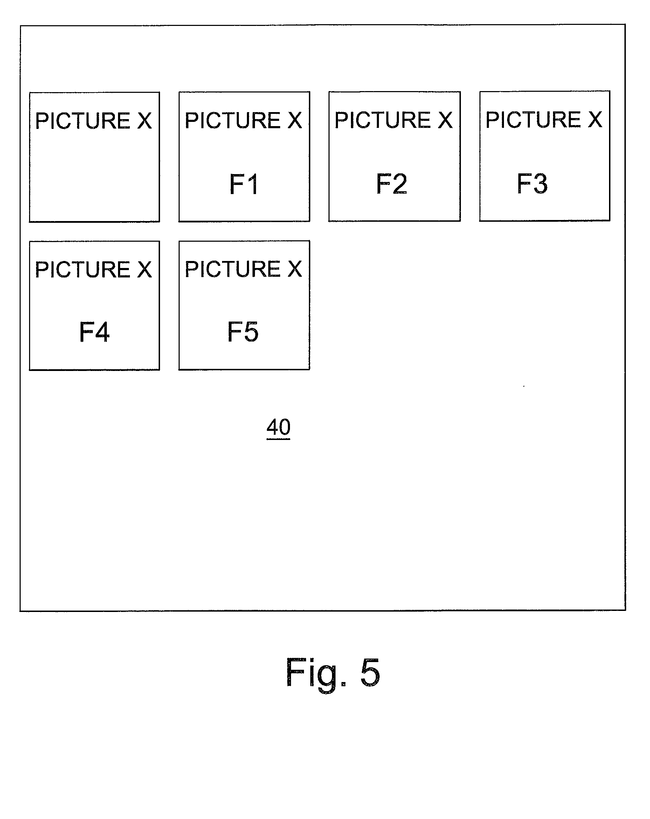

The individually manipulated and scaled images are placed on a page 40 by the software, as shown in Fig. 5. Each picture on the page has been manipulated with a different function and placed in a grid pattern, along with the original picture. A name (F1, F2, F3, F4, F5) is assigned to each image in the library of images through the software utility. These names are arbitrary, but could accurately describe the individual transformation applied to each image.

Referring back to the schematic 12 of Fig. 2, after the multitrial job along path 24 of Fig. 2 is prepared, it is further processed to conventional means by the RIP 26 to create a binary digital file suitable for printing at 28. Typically, RIP's have the capability to further manipulate the image data prior to formatting for the printer. In this case, it is important that the image data pass through the RIP 26 without further color manipulation. The formatted trial job is imaged on the press at block 28 at the same conditions intended for the actual job. Parameters such as paper selection, print speed, dryer temperature, duplex selection, etc., are examples of control variables for the trial job run.

After the trial job is run, the output is reviewed and one picture is selected from the group that most accurately represents the desired image quality. The associated code name of this image is sent via path 30 to be entered back into the software 22 that created the trial job. The code name, supplied in Fig. 5, is identified by the software at 22 and the appropriate transfer function along 32 is output for operation on the entire image library 10 for which the trial job at path 24 was created. The selected image library transformation of path 32 is then applied to the library of images directly in the RIP to format the data for the printer, or in a separate process at block 34 prior to RIPPING at block 36. The output of the RIP 36 is a transformed image library print job optimized for printing at 38 on the press.

Typically, applications such as direct mail and catalogs do not print an entire image library exclusively. The library of images is one set of elements to be combined on composed pages made up of variable and fixed information containing text, line art and graphics. The ability to properly condition an image library prior to processing and printing an integrated job is, therefore, very advantageous. Automatic code naming can be used to identify the selected transfer function . Also, integrated software can be used to create the job for press, based upon user selected transfer functions. An integrated package can output the selected transfer function for further processing of the entire image library. Also, the integrated package can automatically apply transfer functions to the image library and create the job file.

The invention has been described in detail with particular reference to certain preferred embodiments thereof, but it will be understood that modifications and variations can be effected within the spirit and scope of the invention.

## Claims

1. A method for correcting printed color and tone of a library of similar digital images, the method comprising the steps of:
selecting a single image from a library of similar images;
manipulating the selected image with a set of unique transformations;
processing each of the manipulated images for printing using processing workflow identified for each job;
identifying printer settings for actual job data;
printing multiple reproductions of the selected image at the identified printer settings for the job; and
determining optimum transformations by visual inspection of a full array of images, each of the full array of images having been manipulated by a different transformation prior to printing.

2. A method as claimed in claim 1 further comprising the step of providing a transformation identification for each of the printed multiple reproductions of the selected image.

3. A method as claimed in claim 1 further comprising the step of inputting the determined optimum transformations into software to generate multiple variations of the selected image.

4. A method as claimed in claim 1 further comprising the step of identifying different image processing for the printed image.

5. A method as claimed in claim 1 further comprising the step of deriving individual color plane transformations from visual selection of a master transformation applied to the printed multiple reproductions.

6. A method as claimed in claim 1 further comprising the step of fitting multiple of the selected image on a single page.

7. A system for correcting printed color and tone of a library of similar digital images, comprising:
a single image selected from a library of similar images;
means for manipulating the selected image with a set of unique transformations;
means for processing each of the manipulated images for printing;
printer settings identified for actual job data;
multiple reproductions of the selected image printed at the identified printer settings for the job; and
means for determining optimum transformations by visual inspection of a full array of images, each of the full array of images having been manipulated by a different transformation prior to printing.

8. A system as claimed in claim 7 further comprising a transformation identification for each of the printed multiple reproductions of the selected image.

9. A system as claimed in claim 7 further comprising means for inputting the determined optimum transformations into software to generate multiple variations of the selected image.

10. A system as claimed in claim 7 further comprising means for identifying different image processing for the printed image.
